(19) **Europäisches Patentamt / European Patent Office / Office européen des brevets**

(11) **EP 1 418 689 B1**

(12) **EUROPEAN PATENT SPECIFICATION**

(45) Date of publication and mention
of the grant of the patent:
**08.10.2008 Bulletin 2008/41**

(51) Int Cl.:
**H04B 10/10** $^{(2006.01)}$

(21) Application number: **03292682.6**

(22) Date of filing: **28.10.2003**

(54) **Optical receiver for a free-space transmission system**

Optischer Empfänger für ein Freiraumübertragungssystem

Récepteur optique pour un système de transmission en espace libre

(84) Designated Contracting States:
**AT BE BG CH CY CZ DE DK EE ES FI FR GB GR HU IE IT LI LU MC NL PT RO SE SI SK TR**

(30) Priority: **06.11.2002 IT MI20022346**

(43) Date of publication of application:
**12.05.2004 Bulletin 2004/20**

(73) Proprietor: **Alcatel Lucent**
**75008 Paris (FR)**

(72) Inventors:
• **Grassi, Elena**
**20052 Monza (IT)**
• **Leva, Angelo**
**21040 Uboldo (Varese) (IT)**
• **Marazzi, Alberto**
**20100 Milano (IT)**

(74) Representative: **Shamsaei Far, Hassan**
**Alcatel Lucent**
**Intellectual Property & Standards**
**54 rue La Boétie**
**75008 Paris (FR)**

(56) References cited:
**WO-A-01/73979**      **US-A- 5 142 400**
**US-A1- 2002 012 139**

**Description**

This invention concerns the field of optical communications systems in free air and in particular a receiver for such a communications system, having a gathering area that is increased than that of known receivers.

A typical optical communications system in air is based on the transmission of data from one or more laser sources, the beam of which, after being modulated and filtered through a suitable optical system, is projected towards a remote receiver.

The receiver includes one or more lenses that focus the beam gathered directly onto a light-detector or onto an optical fibre coupled with the detector.

Wireless optical communications systems are asserting themselves as an advantageous alternative to the more traditional optical fibre or microwave systems, above all from the point of view of the band. Other advantageous features of wireless optical systems are its low cost, due to the freedom to use the frequencies of interest, and the possibility of being installed easily without requiring digging works to be carried out, which are long, expensive and sometimes logistically impossible.

Said wireless optical systems use the atmosphere as the means of transmission. It is well known that the atmosphere features a high degree of variability in relation to altitude and latitude and of a seasonal nature. It follows that the properties of an optical communications channel as stated also depend on meteorological parameters such as visibility, precipitation, wind and temperature, in addition to system parameters such as wavelength, the divergence of the laser beam, the aperture of the receiver, the distance between the receiver and the transmitter, etc.

The "natural" agents that have the greatest impact on laser propagation in the troposphere are variations in time and space of the refraction index n and the lowering of visibility (which have the effect of strong attenuation) due to mist, fog and precipitation.

Variations in time and space of the refraction index cause losses of sighting (due to changes in the radius of curvature of the electromagnetic beam) and rapid fluctuations of the signal received (due to the composition of the received field contributions with a "random" phase). The reductions in visibility cause weakening that can even be very significant and long-lasting.

Overall, all these effects reduce the optical power received, for periods of time that can range from a few milliseconds to several hours.

In order to forestall these possible instances of weakening of the signal received, it is necessary to design the optical system in such a way that it has a suitable margin of power but also a geometry of the transmission and receiving lenses such as to enable gathering of the greatest possible amount of the light projected towards the remote terminal.

The possibility of using a frequency band not subjected to the constraint of government licences and the availability of devices developed for optical communications on fibres also enables equipment operating at high bit rates (2.5 Gbit/s and above) to be made. Generally speaking, this type of equipment functions at 1550 nm, that is to say in the third window of the optical fibre.

When designing these systems, however, it is necessary to solve several problems that make the receiving section of the equipment itself particularly critical. These problems are analysed in detail below.

As already mentioned, an optical receiving and transmitting system in air consists generally speaking of one transmission section and of one receiving section. The transmission section includes a laser source and an optical system for launching the beam into free space, capable of adjusting in the appropriate manner the divergence of the beam being transmitted. The receiving section includes an optical system capable of gathering the largest possible portion of the incoming light and of focusing it directly onto an optical-electrical transducer (light-detector) or onto a passive optical system such as, for example, an optical fibre having suitable specifications connectorised to the light-detector.

Generally speaking, therefore, the receiving optical system is capable of focusing the portion of light received onto a spot of a finite size, which has to be gathered entirely by the detector. In order for the detector to take in the whole spot, it is necessary for it to be at least of the same size as the spot. In actual fact, as we shall see below, it is necessary to ensure that the gathering area has a certain safety margin so as to increase the stability of the link.

The devices used for the transducing the signal from optical to electrical are mainly PIN and APD diodes. As the speed of response of the detection device (photodiode) increases, its sensitivity drops drastically, typically by -30 dBm (BER 10-9) for an InGaAs APD and by -23 dBm (BER 10-9) for a PIN based on the same technology at 2.5 Gbit/s. The considerable advantage that is obtained, in terms of power budget, by using an APD is obvious.

These devices, however, have active areas with a maximum diameter of about 30 to 40 microns (as compared with the 80 microns of a PIN diode). Theoretically, the receiving area can be increased by using a device coupled with a multimodal fibre having a core diameter of 50 $\mu$m.

To reduce the optical losses at the receiving end, this size entails the use of optical systems (lenses or telescopes) of excellent quality enabling an incident beam to be focused on a very small spot (<50 microns). Such systems, however, may not be sufficient due to mechanical instability caused by vibration of their supports, by heat expansion of the materials used, etc.). Other factors that prevent the optical power gathered at the receiving end from being maximised concern the characteristics of the atmosphere in which the optical beam is propagated.

When a laser signal is transmitted through free space, it undergoes deflections that may be slow or fast, depending on the type of physical phenomenon present in the means of transmission. Shifting the cross-section of the incoming beam as compared with the laser receiver initially centred on the centre of gravity of said cross-section, or changing the direction of arrival of the incoming beam (in terms of angles), will cause the focus spot to shift in respect of the active area of the receiving optics. In the majority of cases, this phenomenon causes a significant loss of power, with consequent deterioration of the performance of the link.

To overcome this inconvenience, it is necessary to implement an autotracking system that will enable the sport to be kept aligned, as well as possible, with the active area of the device. Generally speaking, these systems are capable of offsetting even considerable angular displacement (by up to several degrees) but they are, on the other hand, fairly slow. They are therefore capable of "following" the movements of the supporting structures of laser receivers and transmitters or even those the movements of buildings caused by temperature changes and those connected with wind.

There are other phenomena connected with the atmosphere, and in particular with changes to the refraction index, that may lead to slow deflections of the beam (beam wander), and the effects of which on the reception can be eliminated thanks to a good autotracking system and to correct sizing of the transmission divergence.

The lack of uniformity of the refraction index in the turbulent air between the transmitter and receiver can also generate "turbulence cells", which move at very high speeds (100 Hz) (sparking) and can lead to phenomena of constructive and destructive interference in the receiver. As a consequence of these, an enlargement of the spot is observed in the receiver, with consequent considerable losses in the event of an excessively small receiving area.

US / 2002/0012139 A1 discloses a terrestrial optical communication network of integrated fiber and free-space links which requires no electro-optical conversion between links. Optical signals are received from a free-space link by directing received light onto a plurality of microlenses and then directing light received through each of the microlenses into a respective single mode optical fiber. Light beams from the SMFs are combined into a single light beam in one SMF. The single light beam is amplified with a multi-wavelength fiber amplifier and attenuated with a variable optical attenuator. The power gain of the multi-wavelength fiber amplifier and the attenuation of the variable optical attenuator are controlled. The single light beam is directed into a fiber optic communication system that is optically coupled to the variable optical attenuator.

US5142400 discloses a method and apparatus for automatic acquisition and alignment of an optical beam communication link.

In view of the above, it is clear that there is a deeply felt need to increase the gathering area of a laser beam being received, possibly without lowering the sensitivity of the receiver.

The main aim of this invention is therefore to provide a receiver for an optical communications system in air with a larger gathering area than is the case with traditional receivers, in order to cater for possible losses of alignment between the transmitter and the receiver or for attenuation of the power for weather-related or other reasons.

A further aim of this invention is to provide a method for increasing the gathering area of the laser beam in a receiver for an optical communications system in air, so as to cater for possible losses of alignment between the transmitter and the receiver or for attenuation of the power for weather-related or other reasons.

These and other aims are achieved by means of a receiver according to claim 1 and to a method according to claim 9. Further advantageous characteristics of the invention are indicated in the relevant subordinate claims. All the claims are understood to be integral parts of this description.

The basic idea underlying this invention consists of using tapered multimodal optical fibres placed in the focus of the receiving optical system.

This invention, therefore, calls for a new use of tapered multimodal optical fibres as indicated in claim 7.

The invention will undoubtedly become clear in the detailed description that follows and that is provided by way of example only without constituting a limitation. The description should be read with reference to the attached tables of drawings, in which:

- Fig. 1 illustrates schematically the cross-section of a tapered optical fibre; and
- Fig. 2 illustrates schematically a receiving optical system of an FSO system.

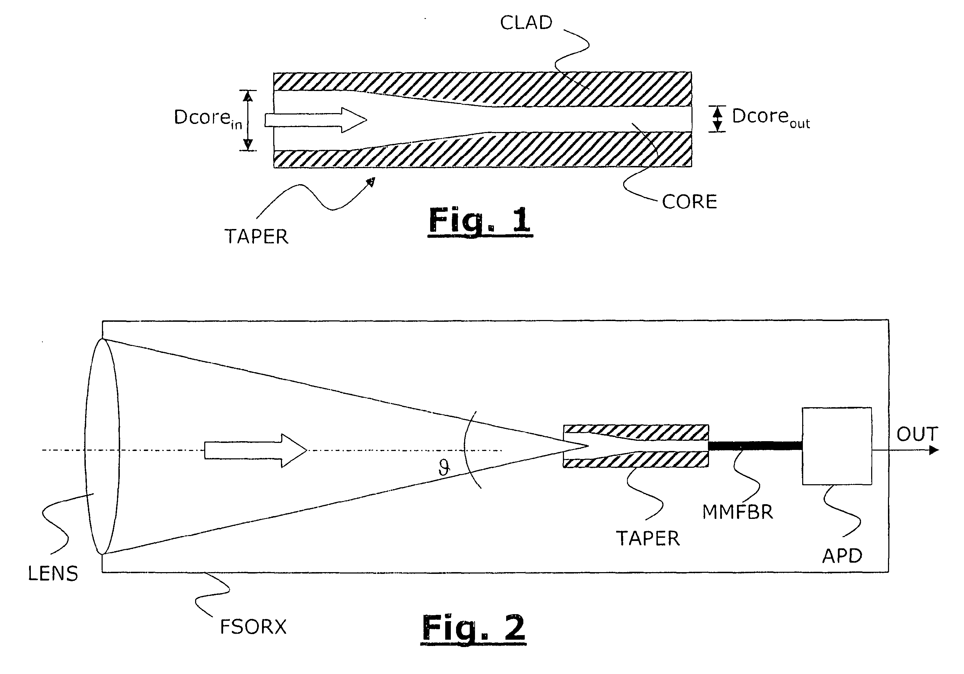

As already indicated above, this invention is based on the use of multimodal tapered fibres placed in the focus of the receiving optical system. A portion of tapered optical fibre is shown schematically in Fig. 1. It is obvious that a "portion of tapered optical fibre" is understood to mean any passive component providing the same characteristics as a tapered optical fibre in terms of variation of the core of the multimodal fibre and of losses between the outgoing signal and the incoming signal.

As can be seen in the drawing provided in Fig. 1, a tapered fibre includes an outer cladding (CLAD) and a core (CORE). Unlike normal optical fibre cables, a tapered fibre is a fibre in which the size of the core varies according to a law that is not univocal, passing from a first larger diameter to a second smaller diameter.

Tapered fibres are commonly used to connect two fibres having different core diameters. If the two fibres are joined together directly without any kind of arrangement, the loss in power of the signal being carried would obviously be equal to the relationship between the squares of the respective core diameters. When, on the other hand, a suitable tapered fibre is used, it is possible to obtain a considerably smaller loss.

Another field in which tapered fibres are used is to couple a laser diode with a multimodal fibre. In this case it is possible to increase the gathering efficiency of the optical power being emitted by the diode.

According to this invention, a tapered fibre (TAPER) is used to gather all the optical power being focused, subject also to the events referred to above, and to guide it, minimising the losses, towards the light-detector to which it is coupled. Conveniently, the aim of using an APD diode as the detector is achieved through the use of a tapered optical fibre, thus increasing the power budget of the receiver considerably.

It is possible to make fibres with input cores equal to or greater than 100 $\mu$m and with output cores equal to the core of the fibre coupled with the APD (50 $\mu$m). The use of tapered fibres does, however, have a limit, consisting of the input numerical aperture, that is to say the losses of a tapered fibre are only minimised if the input beam has a numerical aperture smaller than that of the output fibre by a factor given by the relations between the two cores:

$$ Na_{in} = Na_{out} \cdot (Dcore_{out} / Dcore_{in}) \qquad (1) $$

In which:

$Na_{in}$:       input numerical aperture of the taper;

$Na_{out}$:       output numerical aperture of the taper;

$Dcore_{out}$:       output core diameter; and

$Dcore_{in}$:       input core diameter

This means that, in the case of a tapered fibre having an input diameter of 100 $\mu$m and an output diameter of 50 $\mu$m, the input numerical aperture must be half the output numerical aperture.

In the case of an optical transmission system in air (FSO), a section of tapered fibre can be used as described in the diagram of a FSORX receiver of Fig. 2. The section of tapered fibre is inserted into the focal plane of the receiving system in front of the photodiode coupled with MMFBR multimodal fibre, with the largest diameter placed on the focus of the receiving optical system and the smaller core diameter of the tapered part placed towards the carrying fibre or directly on the area of the active device (photodiode). In this case, in order to avoid incoming losses, it is necessary to chose an optical system having a ratio between the focal point and the diameter of the lens LENS such as to generate a cone having the correct numerical aperture, in accordance with the relationship (1) indicated above. For example, in the case already illustrated (section of tapered optical fibre having a ratio of 2:1, 100 $\mu$m vs 50 $\mu$m), the receiving optical system must be such that (again with reference to Fig. 2) the angle $\theta$ will have a value such that sin $\theta$/2 is equal to 0.1 1 , as is typical of a monomodal SM fibre with a core diameter of 9 $\mu$m. As stated above, the active device conveniently includes an APD diode.

It is possible, theoretically, to use portions of tapered fibres having a higher taper ratio (4:1 or higher), however in this case it would be necessary, if the diameter of the optical system remains the same, to resort to lenses or telescopes having a much longer focal distance.

In addition to enabling fast phenomena to be averted, the decision to use tapered optical fibres in the receiving optical system also helps to make the choice of the optical system less critical in terms of quality and therefore of the spot on the focal plane.

It is obvious, lastly, that this invention considerably simplifies the creation of a possible autotracking system, increasing considerably the field of view (FOV) of the equipment.

The focal distance of the optical system being equal, the field of view is directly proportional to the side of the detector or to the receiving area. In the case referred to above, this means doubling the field of view.

In the light of the description referred to above, many variants, modifications and replacements of parts with other functionally equivalent parts will come to the minds of specialised engineers. It is obvious that all such variants, modifications and replacements of parts fall within the scope of protection hereof, which is limited only by the attached claims.

**Claims**

1. A receiver (FSORX) for an optical communication system in air comprising:

   - at least one receiving lens (LENS) focusing a beam received from a remote transmitter,
   - a detector (APD), and
   - a length of a tapered optical multimodal fibre (TAPER),

   **characterized in that** said length of tapered optical multimodal fiber (TAPER) is arranged in the focal plane of the at least one receiving lens (LENS) and **in that** said length of tapered optical multimodal fibre (TAPER) has a larger core diameter (Dcore$_{in}$), wherein said larger core diameter (Dcore$_{in}$) is the input core diameter and faces towards the at least one receiving lens (LENS), thus providing an increased receiving area of the receiver (FSORX).

2. The receiver (FSORX) according to claim 1, **characterized in that** it also includes a length of untapered multimodal fibre connecting the detector (APD) and the length of tapered optical multimodal fibre (TAPER).

3. The receiver (FSORX) according to claim 1, **characterized in that** said length of tapered optical multimodal fibre (TAPER) comprises a smaller core diameter (Dcore$_{out}$), wherein said smaller core diameter (Dcore$_{out}$) is the output core diameter.

4. The receiver (FSORX) according to claim 1, **characterized in that** said tapered optical multimodal fibre (FIBER) comprises an input numerical aperture and an output numerical aperture, wherein said input numerical aperture is obtained by the following formula:

$$Na_{in} = Na_{out} \cdot (Dcore_{out}/Dcore_{in}) \qquad (1)$$

   in which:

   Na$_{in}$: input numerical aperture of the tapered fibre;
   Na$_{out}$: output numerical aperture of the tapered fibre;
   Dcore$_{out}$: output core diameter; and
   Dcore$_{in}$: input core diameter.

5. The receiver (FSORX) according to claim 1, **characterized in that** said input core diameter (Dcore$_{in}$) is about 100 μm and said output core diameter (Dcore$_{out}$) is about 50 μm.

6. The receiver (FSORX) according to claim 1, **characterized in that** said detector comprises an APD diode.

7. The receiver (FSORX) according to claim 1, wherein said tapered optical multimodal fiber length (TAPER) comprises a core and a cladding around said core **characterized in that** said core comprises a portion at a constant diameter.

8. The receiver (FSORX) according to claim 7, **characterized in that** said core comprises a first portion at a constant diameter, a second portion at a constant diameter and a tapered portion between said first portion and said second portion.

9. A method for increasing a receiving area in a receiver (FSORX) for an optical transmission system in air, wherein the method comprises: providing at least one receiving lens (LENS) for focusing a beam received from a remote transmitter and providing a detector (APD), **characterized by** arranging a length of a tapered optical multimodal fibre (TAPER) in the focal plane of the at least one receiving lens (LENS), said length of tapered optical multimodal fibre (TAPER) having a larger core diameter (Dcore$_{in}$) and a smaller core diameter (Dcore$_{out}$), wherein the length of tapered optical multimodal fibre (TAPER) is arranged in such a way that said larger core diameter (Dcore$_{in}$) is the input core diameter and faces towards the at least one receiving lens (LENS), thus providing an increased receiving area of the receiver (FSORX).

10. The method according to claim 9, **characterised by** a step of connecting the length of tapered optical fibre (TAPER) to the detector (APD) by using a length of untapered multimodal optical fibre (MMFBR).

**Patentansprüche**

1. Ein Empfänger (FSORX) für ein optisches In-Air-Kommunikationssystem, umfassend:

   Mindestens eine Empfängerlinse (LENS), welche einen von einem entfernten Sender empfangenen Strahl fokussiert.
   - einen Detektor (APD), und
   - eine Länge einer gezogenen multimodalen optischen Faser (TAPER),

   **dadurch gekennzeichnet, dass** die besagte Länge der gezogenen multimodalen optischen Faser (TAPER) in der Brennfläche der mindestens einen Empfängerlinse (LENS) angeordnet ist, und dass die besagte Lange der gezogenen multimodalen optischen Faser (TAPER) einen größeren Kerndurchmesser ($Dcore_{in}$) aufweist, wobei der besagte größere Kerndurchmesser ($Dcore_{in}$) der Eingangskerndurchmesser ist und der mindestens einen Empfängerlinse (LENS) gegenüber liegt, wodurch eine vergrößerte, Empfangszone des Empfängers (FSORX) erreicht wird.

2. Der Empfänger (FSORX) nach Anspruch 1, **dadurch gekennzeichnet, dass** er ebenfalls eine Länge einer nicht gezogenen multimodalen Faser umfasst, welche den Detektor (APD) mit der Länge der gezogenen multimodalen optischen Faser (TAPER) verbindet.

3. Der Empfänger (FSORX) nach Anspruch 1, **dadurch gekennzeichnet, dass** die besagte Länge der gezogenen multimodalen optischen Faser (TAMPER) einer kleineren Kerndurchmesser ($Dcore_{out}$) aufweist, Wobei der besagte kleinere Kerndurchmesser ($Dcore_{out}$) der Ausgangskerndurchmesser ist.

4. Der Empfänger (FSORX) nach Anspruch 1, **dadurch gekennzeichnet, dass** die besagte gezogene multimodale optische Faser (TAPER) eine numerische Eingangsöffnung und eine numerische Ausgangsöffnung aufweist, wobei die besagte numerische Eingangsöffnung unter Anwendung der folgenden Formel erreicht wird:

$$Na_{in} = Na_{out} (Dcore_{out}/Dcore_{in}) \hspace{3cm} (1)$$

   worin:

   $Na_{in}$: numerische Eingangsöffnung der gezogenen Faser;
   $Na_{out}$: numerische Ausgangsöffnung der gezogenen Faser;
   $Dcore_{out}$: Ausgangskerndurchmesser; und
   $Dcore_{in}$: Eingangskerndurchmesser.

5. Der Empfänger (FSORX) nach Anspruch 1, **dadurch gekennzeichnet, dass** der besagte Eingangskerndurchmesser ($Dcore_{in}$) ungefähr 100 $\mu$m und der besagte Ausgangskerndurchmesser ($Dcore_{iout}$) ungefähr 50 $\mu$m beträgt.

6. Der Empfänger (FSORX) nach Anspruch 1, **dadurch gekennzeichnet, dass** der besagte Detektor eine APD-Diode umfasst.

7. Der Empfänger (FSORX) nach Anspruch 1 , wobei die besagte gezogene multimodale optische Faserlänge (TAPER) einen Kern und eine Umhüllung um den besagten Kern herum umfasst, **dadurch gekennzeichnet, dass** der Kern eine Portion mit einem konstanten Durchmesser umfasst.

8. Der Empfänger (FSORX) nach Anspruch 7, **dadurch gekennzeichnet, dass** der Kern eine erste Portion mit einem konstanten Durchmesser, eine zweite Portion mit einem konstanten Durchmesser und eine gezogene Portion zwischen der besagten ersten Portion und der besagten zweiten Portion umfasst.

9. Ein Verfahren zum Vergrößern der Empfangszone in einem Empfänger (FSORX) für ein optisches In-Air-Übertragungssystem, wobei das Verfahren umfasst Bereitstellen von mindestens einer Empfängerlinse (LENS), welche einen von einem entfernten Sender empfangenen Strahl fokussiert und Bereitstellen eines Detektors (APD), **dadurch gekennzeichnet, dass** eine Länge einer gezogenen multimodalen optischen Faser (TAPER) in der Brennfläche der mindestens einen Empfängerlinse (LENS) angeordnet ist, wobei die besagte Länge der gezogenen multimodalen optischen Faser (TAPER) einen größeren Kerndurchmesser ($Dcore_{in}$) und einen kleineren Kerndurchmesser (Dco-

re$_{out}$) aufweist, wobei die Länge der gezogenen multimodalen optischen Faser (TAPER) so angeordnet ist, dass der besagte größere Kerndurchmesser (Dcore$_{in}$) der Eingangskerndurchmesser ist und der mindestens einen Empfängerlinse (LENS) gegenüber liegt, wodurch eine vergrößerte Empfangszone des Empfängers (FSORX) entsteht.

10. Das Verfahren nach Anspruch 9, **gekennzeichnet durch** einen Schritt des Verbindens der Länge der gezogenen multimodalen optischen Faser (TAPER) mit dem Detektor (APD) **durch** Verwenden einer Länge einer nicht gezogenen multimodalen optischen Faser (MMFBR).

**Revendications**

1. Récepteur (FSORX) pour un système de communication optique dans l'air comprenant:

   - au moins une lentille de réception (LENS) focalisant un faisceau reçu d'un émetteur distant,
   - un détecteur (APD), et
   - une longueur d'une fibre optique multimodale effilée (TAPER),

   **caractérisé en ce que** ladite longueur de fibre optique multimodale effilée (TAPER) est agencée dans le plan focal de la au moins une lentille de réception (LENS) et **en ce que** ladite longueur de fibre optique multimodale effilée (TAPER) présente un diamètre de noyau p!us grand (Dcorein), dans lequel ledit diamètre de noyau plus grand (Dcorein) est le diamètre de noyau d'entrée et est orienté vers la au moins une lentille de réception (LENS), fournissant ainsi une zone de réception augmentée du récepteur (FSORX).

2. Récepteur (FSORX) selon la revendication 1, **caractérisé en ce qu'**il inclut également une longueur de fibre optique multimodale non effilée reliant le détecteur (APD) et la longueur de fibre optique multimodale effilée (TAPER).

3. Récepteur (FSORX) selon la revendication 1, **caractérisé en ce que** ladite longueur de fibre optique multimodale effilée (TAPER) comprend un diamètre de noyau plus petit (Dcoreout), dans lequel ledit diamètre de noyau plus petit (Dcoreout) est le diamètre de noyau de sortie.

4. Récepteur (FSORX) selon la revendication 1. **caractérisé en ce que** ladite fibre optique multimodale effilée (FIBER) comprend une ouverture numérique d'entrée et une ouverture numérique de sortie, dans lequel ladite ouverture numérique d'entrée est obtenue par la formule suivante :

$$\text{Nain} = \text{Naout} \cdot (\text{Dcoreout}/\text{Dcorein}) \tag{1}$$

dans laquelle:

   Nain : ouverture numérique d'entrée de la fibre optique effilée ;
   Naout : ouverture numérique de sortie de la fibre optique effilée ;
   Dcoreout : diamètre de noyau de sortie ; et
   Dcorein : diamètre de noyau d'entrée.

5. Récepteur (FSORX) selon la revendication 1, **caractérisé en ce que** ledit diamètre de noyau d'entrée (Dcorein) est d'environ 100 $\mu$m et ledit diamètre de noyau de sortie (Dcoreout) est d'environ 50$\mu$m.

6. Récepteur (FSORX) selon la revendication 1, **caractérisé en ce que** ledit détecteur comprend une diode APD (diode à avalanche).

7. Récepteur (FSORX) selon la revendication 1, dans lequel ladite longueur de fibre optique multimodale effilée (TAPER) comprend un noyau et un revêtement autour de ce noyau **caractérisé en ce que** ledit noyau comprend une partie à un diamètre constant.

8. Récepteur (FSORX) selon la revendication 7, **caractérisé en ce que** ledit noyau comprend une première partie à un diamètre constant, une seconde partie à un diamètre constant et une partie effilée entre ladite première partie et ladite seconde partie.

9. Procédé permettant d'augmenter une zone de réception dans un récepteur (FSORX) pour un système de transmission optique dans l'air, dans lequel le procédé comprend : la fourniture d'au moins une lentille de réception (LENS) pour focaliser un faisceau reçu d'un émetteur distant et la fourniture d'un détecteur (APD), **caractérisé par** l'agencement d'une longueur d'une fibre optique multimodale effilée (TAPER) dans le plan focal de la au moins une lentille de réception (LENS), ladite longueur de fibre optique multimodale effilée (TAPER) ayant un diamètre de noyau plus grand (Dcorein) et un diamètre de noyau plus petit (Dcoreout), dans lequel la longueur de fibre optique multimodale effilée (TAPER) est agencée de telle manière que ledit diamètre de noyau plus grand (Dcorein) soit le diamètre de noyau d'entrée et soit oriente vers la au moins une lentille de réception (LENS), fournissant ainsi une zone de réception augmentée du récepteur (FSORX).

10. Procédé selon la revendication 9, **caractérisé par** une étape de liaison de la longueur de fibre optique effilée (TAPER) au détecteur (APD) à l'aide d'une longueur de fibre optique multimodale non effilée (MMFBR).

CLAD

$Dcore_{in}$

$Dcore_{out}$

TAPER

CORE

## Fig. 1

LENS

$\vartheta$

TAPER

MMFBR

APD

OUT

FSORX

## Fig. 2

EP 1 418 689 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020012139 A1

- US 5142400 A